# EUROPÄISCHE PATENTANMELDUNG

(11) **EP 3 264 267 A1**
(43) Veröffentlichungstag der Anmeldung: **03.01.2018**
(21) Anmeldenummer: 16177261.1
(22) Anmeldetag: 30.06.2016
(51) Int. Cl.: G06F 9/48

(54) **VERFAHREN UND ANORDNUNG ZUR DARSTELLUNG ODER AKTUALISIERUNG EINER GRAPHISCHEN BENUTZEROBERFLÄCHE EINES INDUSTRIELLEN BEDIEN- UND BEOBACHTUNGSSYSTEMS**

(71) Anmelder: Siemens Aktiengesellschaft, 80333 München (DE)
(72) Erfinder: Eckl, Roland, 91301 Forchheim (DE); Herberth, Harald, 90522 Oberasbach (DE)

(57) **Zusammenfassung**

Die Erfindung betrifft ein Verfahren und eine Anordnung zur Darstellung oder Aktualisierung einer graphischen Benutzeroberfläche eines industriellen Bedien- und Beobachtungssystems auf einem Gerät vorgeschlagen, wobei die Benutzeroberfläche aus einer Anzahl darzustellender Elemente besteht, wobei die jeweiligen Elemente mit jeweils unterschiedlicher Qualität darstellbar sind, wobei abhängig von der Qualität der Darstellung eines jeweiligen Elements eine jeweilige Ausführungszeit für diese Darstellung durch das Gerät benötigt wird. Dabei wird während des Betriebs des Gerätes die jeweilige Ausführungszeit für die Darstellung der Elemente auf diesem Gerät ermittelt und daraus die zur Darstellung der Aktualisierung der gesamten Benutzeroberfläche benötigte gesamte Ausführungszeit errechnet oder abgeschätzt, wobei die errechnete oder abgeschätzte gesamte Ausführungszeit mit einer vorgegebenen Maximaldauer in Bezug gesetzt wird, und wobei aus dem Bezug die jeweilige zu verwendende Qualität zur Darstellung der jeweiligen Elemente derart angepasst wird, dass die Maximaldauer eingehalten und dabei eine bestmögliche Qualität der gesamten Darstellung erreicht wird. Durch das geschilderte Verfahren kann dynamisch die Darstellungsqualität der einzelnen Elemente und damit der Gesamtansicht so gesteuert werden, dass die erforderlichen Darstellungszeiten bzw. Refresh-Raten eingehalten werden und sich dennoch eine bestmögliche Qualität der Gesamtansicht ergibt.

## Beschreibung

Die Erfindung betrifft ein Verfahren zur Darstellung oder Aktualisierung einer graphischen Benutzeroberfläche gemäß dem Oberbegriff des Patentanspruchs 1, und einer Anordnung zur Durchführung des Verfahrens gemäß dem Oberbegriff des Patentanspruchs 10.

In der Technologie der industriellen Automatisierungsanordnungen werden üblicherweise Bedien- und Beobachtungssysteme und -geräte eingesetzt, die zur Darstellung von Produktions- und Prozessinformationen und zur Eingabe von Befehlen, Parametern und dgl. verwendet werden. Solche Geräte werden oft auch als "HMI" (Human-Machine-Interface) bezeichnet. Dabei sind in der Regel eine oder mehrere Ansichten auswählbar, die auch oft als "Screens" bezeichnet werden und auf einer Bildschirmseite eine Anzahl von Elementen ("GUI"-Elemente (Graphical User Interface-Elemente) - oft auch als "Objekte", "screen items" o.ä. bezeichnet) darstellen. Elemente können dabei Bedienelemente sein, also beispielsweise Buttons, Slider etc., oder Beobachtungselemente, wie z.B. Digitalanzeigen, Pseudo-Analoganzeigen, simulierte "Kontrollleuchten", Füllstandsanzeigen und dgl.

Für die genannten Bedien- und Beobachtungsgeräte, oft auch als speziell dafür designte "Panels" im industriellen Umfeld ausgeführt, werden Minimalanforderungen gestellt, die sich u.a. darauf beziehen, wie oft pro Sekunde der Bildschirminhalt aktualisiert werden muss bzw. wie lange ein Neuaufbau einer Sicht oder Bildschirmseite dauern darf. Die für die erstmalige, vollständige Darstellung oder die Aktualisierung ("Refresh") benötigte Zeit hängt zum Einen von der Komplexität der für die Aufbereitung der Darstellung erforderlicher Datenverarbeitung bzw. Berechnungen und insbesondere von den Grafik-Berechnungen ab, und zum Anderen natürlich von der Leistungsfähigkeit der zugrundeliegenden Hardware, also im Wesentlichen von der Speicherausstattung, der Prozessorleistung und der Leistung der Graphikbausteine, die beispielsweise für die visuelle Aufbereitung ("Rendering" etc.) zuständig sind.

Während klassischer Weise die Hersteller von Automatisierungsanordnungen und Automatisierungslösungen verschiedene spezielle Bedien- und Beobachtungsgeräte ("Panels") bereitgestellen, deren Hard- und Softwareausstattung und damit deren Leistungsfähigkeit bereits zum Engineering-Zeitpunkt feststeht, und somit für solche Geräte schon zum Zeitpunkt des Engineerings gut vorhergesagt werden kann, wie lange eine Darstellung bzw. ein "Refresh" dauern wird, werden heutzutage vermehrt auch handelsübliche PC's mit einem Web-Browser zur Bereitstellung der Benutzeroberfläche oder mobile Geräte wie Tablet-PC's mit sog. "Apps" als lokale Software ("Client-Software") eingesetzt. Diese häufig von Fremdherstellern gelieferten Geräte und deren Leistungsfähigkeit sind zum Zeitpunkt des Engineerings, bei dem die Inhalte der "Screens" festgelegt werden, häufig nicht bekannt. Zudem hängt die Leistungsfähigkeit der genannten Geräte immer auch davon ab, wie viele und welche andere Prozesse, Applikationen und Programme zur gleichen Zeit ebenfalls installiert sind bzw. abgearbeitet werden; solche Betriebsparameter sind nicht vorhersagbar.

Also haben die zum Bedienen und Beobachten eingesetzten Anwendungen für mobile Geräte oder Browser (sog. "Apps") es mit einem besonderen heterogenen Umfeld bezüglich ihrer Ausführungsplattform zu tun, was für die Hardware, für die Software (z.B. Betriebssystem, Laufzeitumgebung, Rendering-Technologie etc.), als auch für die Auslastung mit Anwendungen Dritter zutrifft.

Dabei resultieren die verschiedenen Konfigurationen in sehr unterschiedlichen Fähigkeiten und Leistungsparametern.

Insbesondere Web-Anwendungen, welche typischerweise Browserseitig in einer single-threaded Javascript-Umgebung ausgeführt werden, können dazu nur bedingt auf Parallelisierung zurückgreifen und weisen somit häufig Unzulänglichkeiten bezüglich ihrer Verarbeitungsgeschwindigkeit auf. Ebenso weisen verschiedene Browser bzw. Browser-Versionen selbst auf identischer Hardware untereinander signifikant unterschiedliche Performance auf. Selbst auf ein- und demselben Gerät ist die Performance daher weder eindeutig a-priori zu bestimmen, noch konstant.

Gerade jedoch im industriellen Umfeld muss auch unter widrigen Umständen die Bedienbarkeit eines Prozesses oder einer Automatisierungsanordnung jederzeit sichergestellt sein, was bedeutet, dass beispielsweise bestimmte Refresh-Raten garantiert werden müssen.

Das Problem wird klassischer Weise häufig dadurch gelöst, dass a-priori eine Typ-Analyse der Hardware durchgeführt wird, wobei beispielsweise festgestellt wird, welcher Prozessor mit welcher Taktfrequenz verbaut ist, welche Leistungsdaten eine GPU (Graphical Processing Unit) aufweist, etc. Entsprechend der verbauten bzw. geplanten Hardware-Eigenschaften wird dann eine Anpassung der Auflösung oder eine Verringerung der Bildwiederholrate, eine Vereinfachung bzw. Verringerung des Renderings etc. eingeplant. Dies ist insbesondere bei aufwendigen Computerspielen gängige Praxis. Eine solche Analyse wird, wie gesagt, a-priori durchgeführt, wonach die Applikation basierend auf Regeln eine bestimmte DarstellungsQualität auswählt und diese anwendet. Teilweise ist es auch möglich, dass ein Benutzer zur Laufzeit, insbesonder bei Programmstart, entsprechende Parameter fest vorgibt.

Wie bereits zuvor angedeutet, ist eine Relation zwischen Bildwiederholrate (Refresh-Rate) und Darstellungsqualität bekannt. Unterschreitet beispielsweise die Bild-Wiederholrate einen gewissen Wert, so werden in der Regel keine weiteren Objekte mehr der Darstellung hinzugefügt. Dies führt beispielsweise dazu, dass auf die Darstellung von dekorativen Bildelementen verzichtet wird oder beispielsweise keine weiteren Bilder, Fotos etc. dargestellt werden.

Bei den genannten HMI-Systemen ist es allerdings schwierig, die maximale Anzahl der darzustellenden Objekte in Abhängigkeit der Leistungsfähigkeit der gerade verwendeten Hardware bzw. des gerade verwendeten "Clients" unterschiedlich vorab festzulegen. In der Regel werden bei solchen technischen Anwendungen ohnehin nur die notwendigen Elemente zur Darstellung projektiert, die dann zwingend auch alle dargestellt werden müssen.

Zudem ist ein Zugriff auf die Hardware-Informationen und auf andere die Leistung bestimmende bzw. limitierende Faktoren, wie z.B. die genauen Versionen des Betriebssystems, der Graphikeinheit etc. in Client-Server-Szenarien wie bei der Verwendung von Web-Browsern oder von Mobilgeräten mit sog. "Apps" meist nicht oder nur schwierig möglich, um eine Abstimmung über die Darstellung a-priori vorzunehmen. Weiterhin ist es nicht wünschenswert, die Darstellungsqualität eines "Screens" aus Sicherheitsgründen dauerhaft einzuschränken, wie dies beispielsweise bei Computerspielen zur Erlangung gewünschter "Frameraten" akzeptiert wird. Zudem ist eine solche a-priori Festlegung nicht in der Lage, in kritischen Situationen bzw. bei einem temporären Abfall der Leistungsfähigkeit der eingesetzten Systeme flexibel zu reagieren. Im industriellen Umfeld ist es stattdessen wünschenswert, die Darstellung vollständig und dabei stets mit bestmöglicher Darstellungsqualität einzustellen.

Es ist also eine Aufgabe der vorliegenden Erfindung, die Bedienbarkeit von Bedien- und Beobachtungssystemen auch unter verschiedenen, unterschiedlichen Voraussetzungen stets sicherzustellen und dabei insbesondere die Einhaltung von Mindestanforderungen bezüglich der Darstellungszeit bzw. der Aktualisierungsdauer einer gesamten Darstellung zu gewährleisten.

Es ist ein Kerngedanke zur Lösung der oben genannten Aufgabe, zur Laufzeit des Bedien- und Beobachtungssystems auf dem jeweils verwendeten Gerät, auf dem die Darstellung bzw. Bedienung erfolgen soll, zunächst die Verarbeitungsgeschwindigkeit bzw. Darstellungsgeschwindigkeit der einzelnen Elemente, z.B. Objekte oder visuelle Artefakte, etc.) in Abhängigkeit von der jeweiligen Darstellungsqualität zu messen. Die Qualität kann dabei durch verschiedene Parameter definiert sein, beispielsweise als Detailreichtum der darzustellenden Einzel-Objekte ("Screen-Items"), als Grad an Synchronität innerhalb der Darstellung bzw. des Refreshs einer Darstellung bzw. eines "Screens", bei dem das visuelle Erscheinen aller Objekte möglichst quasi-gleichzeitig erfolgt und nicht in Etappen, oder auch als Grad an Bedienbarkeit während der Aufbereitung einer Darstellung bzw. eines "Refreshs". Das Erzeugen oder "Rendern" eines jeden Objekts, Elementes oder "Artefakts" benötigt also eine gewisse Zeit, die abhängig von konfigurierten Eigenschaften eines Elementes, Artefaktes oder Objektes ist (z.B. einfarbige Füllung anstatt eines Gradienten für den Hintergrund) oder auch vom Anwenden von Effekten (Transparenz, Blur, Pattern, Motion etc.) auf die Elemente. Erfindungsgemäß soll nach Feststellung dieser Basisdaten über die Darstellungsdauer bzw. die benötigte Zeit zur Aufbereitung und Darstellung der einzelnen Elemente oder Artefakte eine Vorausberechnung der benötigten Zeit für die Aufbereitung der gesamten Darstellung bzw. für den gesamten "Refresh" (Aktualisierung) eines Bildschirminhaltes verwendet werden, wobei man sich zu Nutze macht, dass Art und Anzahl der Elemente einer Sicht (Screen) vorab bekannt sind. Sofern die prognostizierte Darstellungszeit oder später die tatsächliche Darstellungszeit eine vorgegebene Maximaldauer überschreitet, kann automatisch die Darstellungsqualität der Elemente verringert werden bzw. im umgekehrten Fall, in dem noch genügend Rest-Rechenleistung oder Rest-Rechendauer zur Verfügung steht, die Qualität der Darstellung entsprechend verbessert werden.

Die Aufgabe wird insbesondere durch ein Verfahren gemäß dem Patentanspruch 1 und durch ein System gemäß dem Patentanspruch 10 gelöst.

Dabei wird ein Verfahren zur Darstellung oder Aktualisierung einer graphischen Benutzeroberfläche eines industriellen Bedien- und Beobachtungssystems auf einem Gerät vorgeschlagen, wobei die Benutzeroberfläche aus einer Anzahl darzustellender Elemente besteht, wobei die jeweiligen Elemente mit jeweils unterschiedlicher Qualität darstellbar sind, wobei abhängig von der Qualität der Darstellung eines jeweiligen Elements eine jeweilige Ausführungszeit für diese Darstellung durch das Gerät benötigt wird. Dabei wird während des Betriebs des Gerätes die jeweilige Ausführungszeit für die Darstellung der Elemente auf diesem Gerät ermittelt und daraus die zur Darstellung der Aktualisierung der gesamten Benutzeroberfläche benötigte gesamte Ausführungszeit errechnet oder abgeschätzt, wobei die errechnete oder abgeschätzte gesamte Ausführungszeit mit einer vorgegebenen Maximaldauer in Bezug gesetzt wird, und wobei aus dem Bezug die jeweilige zu verwendende Qualität zur Darstellung der jeweiligen Elemente derart angepasst wird, dass die Maximaldauer eingehalten und dabei eine bestmögliche Qualität der gesamten Darstellung erreicht wird. Durch das geschilderte Verfahren kann dynamisch die Darstellungsqualität der einzelnen Elemente und damit der Gesamtansicht so gesteuert werden, dass die erforderlichen Darstellungszeiten bzw. Refresh-Raten eingehalten werden und sich dennoch eine bestmögliche Qualität der Gesamtansicht ergibt.

Die Aufgabe wird weiter auch durch eine Anordnung zur Darstellung oder Aktualisierung einer graphischen Benutzeroberfläche eines industriellen Bedien- und Beobachtungssystems mit einem Gerät gelöst, wobei die Benutzeroberfläche aus einer Anzahl darzustellender Elemente besteht, wobei vorgesehen ist, dass eine Anzahl der Elemente in verschiedenen Alternativen mit jeweils unterschiedlicher Qualität darstellbar ist, wobei abhängig von der Qualität die Darstellung eines jeweiligen Elementes eine jeweilige Ausführungszeit benötigt. Dabei weist das Gerät eine Funktion zur Ermittlung der jeweiligen Ausführungszeit für die jeweilige Darstellung der Elemente, vorzugsweise differenziert nach der jeweiligen Qualität, während des Betriebs auf, wobei weiter eine Funktion zur Errechnung oder Abschätzung der zur Darstellung oder Aktualisierung der gesamten Benutzeroberfläche benötigten gesamten Ausführungszeit vorgesehen ist, wobei Mittel zur Inbezugsetzung der errechneten oder abgeschätzten gesamten Ausführungszeit zu einer vorgegebenen Maximaldauer vorgesehen sind, und wobei das Gerät dazu eingerichtet ist, aus dem Bezug die jeweilige zu verwendende Qualität zur Darstellung der jeweiligen Elemente festzulegen, so dass die Maximaldauer eingehalten und die dabei bestmögliche Qualität der Darstellung sich ergibt. Mit einer solchen Anordnung lassen sich die bereits anhand des Verfahrens diskutierten Vorteile erreichen.

Vorteilhafte Ausgestaltungen des erfindungsgemäßen Verfahrens sind in den abhängigen Patentansprüchen angegeben. Die dabei erwähnten Merkmale und deren Vorteile gelten sinngemäß auch für die erfindungsgemäße Anordnung. Die geschilderten vorteilhaften Ausgestaltungen können sowohl einzeln, als auch in freier Kombination miteinander realisiert werden.

Vorteilhaft wird als das Gerät ein Computer mit einem Web-Browser zur Darstellung der graphischen Benutzeroberfläche oder ein mobiles Gerät mit einer mobilen Applikation zur Darstellung der graphischen Benutzeroberfläche verwendet. Durch Einsatz des erfindungsgemäßen Verfahrens ist es also damit möglich, bereits vorhandene bzw. anderweitig beschaffte Geräte, deren Leistungsdaten zum Zeitpunkt des Engineerings des Bedien- und Beobachtungssystems noch nicht bekannt sind, unter Einhaltung der geforderten Leistungsparameter einzusetzen. Solche Systeme bestehen üblicherweise aus einem Client-Anteil und einem Server-Anteil, wobei in einer vorteilhaften Ausgestaltung zunächst Client-seitig ,also seitens des Web-Browsers bzw. der mobilen Applikation, Leistungsdaten wie Ausführungsgeschwindigkeit bzw. Darstellungsgeschwindigkeit einzelner Elemente gewonnen werden, wonach dann Server-seitig die Elemente in der entsprechend geforderten Qualität zur Darstellung bereitgestellt werden, so dass seitens des Clients keine aufwendigen Umrechnungen zur Anpassung der Elemente erforderlich sind. Alternativ können die Elemente Server-seitig auch in verschiedenen Qualitätsstufen vorab gespeichert sein und dem Client entweder einzeln situationsabhängig zur Verfügung gestellt werden, oder aber es können alle Darstellungsstufen bzw. -qualitäten vorab zum Client übertragen werden, wo dieser situationsabhängig die entsprechende Instanz des Elements auswählt. Natürlich sind situationsbedingt auch Mischformen möglich, was beispielsweise zur Verfügung stehenden Speicherplatz und von den Client-seitig und Server-seitig verfügbaren Rechenkapazitäten etc. abhängt.

Vorteilhaft wird nicht die Verarbeitungszeit eines jeden Elementes geprüft bzw. gemessen oder abgeschätzt, sondern es wird vorteilhaft nach Element-Typen unterschieden, wobei angenommen wird, dass alle Elemente eines bestimmten Typs mit einer gleichen oder ähnlichen Rechenlast und damit Verarbeitungsdauer einhergehen. Damit kann die Evaluierung der Leistungsfähigkeit des entsprechend eingesetzten Systems vereinfacht werden. Eine Alternative oder weitere Vereinfachung ergibt sich, wenn angenommen wird, dass für die Elemente Artefakte eingesetzt werden, wobei die Artefakte eine Art Grundbaustein für verschiedene Objekte der graphischen Benutzeroberfläche sind und somit beispielsweise eine bestimmtes Artefakt Bestandteil unterschiedlicher Elemente, Objekte oder "Screen-Items" ist. Entsprechend gewonnene Information über die Verarbeitungsdauer eines solchen Artefaktes lassen dabei also Rückschlüsse auf die Verarbeitungs- oder Darstellungsdauer der damit erstellten Objekte zu. Zudem können diese Artefakte in unterschiedlichen Qualitätsstufen vorgesehen werden, so dass sich situationsabhängig auch die damit erstellten Elemente und Objekte automatisch in der geforderten Qualitätsstufe und damit mit dem erforderlichen maximalen Rechenaufwand ergeben. Anstelle der Messung der für die Darstellung bzw. den "Refresh" der Elemente oder Artefakte in jeglicher Qualität bzw. Qualitätsstufe kann auch eine Messung in einer Qualität erfolgen und die benötigte Zeit für eine andere Darstellungsvariante davon abgeleitet werden. So kann beispielsweise angenommen werden, dass bei einer Halbierung der Auflösung einer Grafik auch der Aufwand für die Berechnungen, z.B. das Rendering, sich erheblich verringert.

Zur weiteren Optimierung ist es möglich, für verschiedene Elemente auch verschiedene Anforderungen für die Maximaldauer des Darstellungsaufbaus bzw. eine Mindest-Wiederholrate der Darstellung oder der Aktualisierung zu definieren. So können bzw. müssen beispielsweise Elemente oder Objekte, die zur Darstellung eines Alarms dienen, sehr häufig aktualisiert werden, während beispielsweise Anzeigeelemente zur Darstellung des Tagesdatums oder zur Darstellung eines sich langsam ändernden Prozessparameters entsprechend seltener und mit weniger harten Zeitanforderungen aktualisiert werden müssen.

In einer weiteren vorteilhaften Ausgestaltung ist es möglich, mehrere sukzessive Änderungen eines Elementes zu einer Gesamt-Änderung zusammenzufassen und somit beispielsweise die Darstellung von Zwischenstufen oder Zwischen-Zuständen einzusparen. Dies kann zwar beispielsweise dazu führen, dass die Änderung einer Darstellung als ruckelnd empfunden wird, bietet jedoch den Vorteil, dass für andere, wichtigere Elemente die geforderten Refresh-Raten eingehalten werden können. Zudem wird in den Fällen, in denen während des Aufbaus oder Refreshs der Darstellung eine Bedienbarkeit gegeben sein muss, auch dafür Rechenzeit reserviert werden.

Vorteilhaft wird die zur Darstellung eines Elementes oder eines Artefaktes benötigte Zeitdauer bzw. der dazu erforderliche Rechenaufwand vor der ersten Darstellung eines Bildschirminhaltes oder dgl. oder während der ersten Darstellung erfasst und gespeichert. Damit kann schon gleich nach Beginn bzw. nach dem Start eines Systems eine gute Anpassung an die jeweiligen Hardware- und Softwarevoraussetzungen des Clients erfolgen. Vorteilhaft werden jedoch diese Messungen periodisch oder gar bei jedem "Refresh" aktualisiert, so dass auch auf Änderungen der Anforderungen und Änderungen der Randbedingungen, beispielsweise einer sich ändernden Performance durch Starten oder Beenden anderer Prozesse auf dem Client, dynamisch reagiert werden.

Zur Reduzierung der Verarbeitungsgeschwindigkeit, die sich bei der Darstellung oder der Aktualisierung von Elementen der Darstellung ergibt, können verschiedene Qualitätsparameter der Elemente beeinflusst werden, insbesondere kann die optische Auflösung eines graphischen Objektes variiert werden, die Farbtiefe oder Detaillierung der dazustellenden Inhalte angepasst werden, oder es können auch weniger wichtige oder nur dekorative Elemente weggelassen werden. Umgekehrt kann natürlich auch in dem Fall, in dem die zur Verfügung stehende Rechenleistung nicht voll ausgeschöpft wird, die Qualität der Darstellung der einzelnen Elemente wieder erhöht werden.

Ein Ausführungsbeispiel des erfindungsgemäßen Verfahrens und damit auch ein Ausführungsbeispiel der erfindungsgemäßen Anordnung werden nachfolgend anhand der Zeichnungen erläutert.

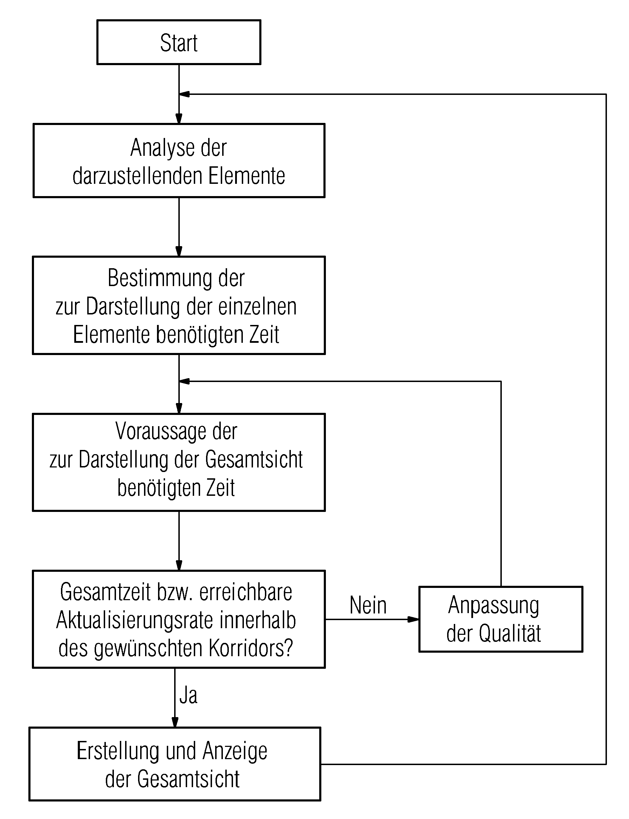

Dabei zeigt die einzige Figur in schematischer Darstellung ein Ablaufdiagramm für eine Software zur Realisierung des erfindungsgemäßen Verfahrens, wobei diese Software auf einem Bedien- und Beobachtungssystem bzw. einem dazu verwendeten Gerät abläuft.

Im folgenden soll davon ausgegangen werden, dass als das Gerät ein Personal-Computer mit einem Web-Browser als Anzeigemittel verwendet wird, wobei dieser Web-Browser mit einem Web-Server einer industriellen Automatisierungsanordnung in Verbindung steht, und wobei der Web-Server eine Anzeigeseite (Screen) mit verschiedenen Elementen (Objekten) zu dem Web-Browser übermittelt, wo diese dargestellt wird und von einem Benutzer bedient werden kann. Eine solche Anordnung entspricht seitens der grundsätzlichen Ausführung an Hard- und Software dem Stand der Technik und ist daher in der Figur nicht dargestellt.

Ein Element (Objekt) besteht in der hier gezeigten vorteilhaften Ausgestaltung aus verschiedenen visuellen Artefakten, welche anspruchsvollere Eigenschaften oder Effekte aufweisen können. Solche Artefakte sind also beispielsweise Grundbausteine, aus denen größere Elemente oder Objekte aufgebaut sind. Ein Artefakt kann also beispielsweise eine gemusterte Fläche ("Kachel") sein, wobei mit einer Vielzahl solcher "Kacheln" der Hintergrund verschiedener Elemente ausgefüllt sein kann. Es können solche Artefakte auch durchaus über verschiedene Typen von Elementen hinweg zum Einsatz kommen. Artefakte können auch Eigenschaften besitzen, die parametrierbar sind und dabei Einfluss auf den Rechenaufwand bei ihrer Darstellung besitzen. So kann beispielsweise ein Parameter besagen, ob eine Fläche einfarbig oder gemustert dargestellt werden soll, wobei die einfarbige Darstellung wesentlich weniger aufwändig ist, als es die gemusterte Darstellung ist. Alternativ können auch komplexe Artefakte gegen kompatible Artefakte in einfacherer Ausführung austauschbar sein, und umgekehrt.

Bevor die darzustellende Web-Page bzw. screen mit den Elementen erstmalig dargestellt wird, wird der Inhalt analysiert. Diese Analyse kann vorteilhaft bereits Server-seitig, also seitens des Web-Servers oder einer Datenquelle erfolgen, kann jedoch auch in einer alternativen Ausgestaltung Client-seitig erfolgen, also auf dem Computer oder Gerät mit dem Web-Browser oder einer vergleichbaren Applikation.

Es sei angenommen, dass bei der Analyse festgestellt wird, dass eine Anzahl verschiedener Element-Typen vorkommt, die jeweils mehrfach zur Anzeige gebracht werden sollen. Anstelle der Elemente-Typen können auch Typen von Artefakten betrachtet werden. Für jeden der Elemente-Typen wird Client-seitig erfasst, wie lange die Darstellung oder - bei einer wiederholen Darstellung (refresh) - eine Aktualisierung benötigt.

Dies wird idealer Weise für alle vorkommenden Elemente-Typen wiederholt, so dass sich aus der Multiplikation der Häufigkeit mit den Einzelzeitwerten eine Gesamtzeit für die Darstellung der Website bzw. für eine Aktualisierung der Website ergibt.

In alternativen Ausführungsformen kann auch der Aufbau bzw. die Aktualisierung der kompletten Website komplett gemessen werden, was zwar dazu führt, dass ein entsprechendes Ergebnis später, also nach erstmaliger Darstellung, vorliegt, aber in der Regel genauere Angaben ergibt. Ebenso sind Mischformen möglich.

Während die genauesten Ergebnisse zu erwarten sind, wenn für jeden Elemente-Typ oder für jeden Typ eines Artefaktes für jede mögliche Parametrierung (z. B. einfarbige Darstellung oder gemusterte Darstellung) separat die zur Darstellung oder Aktualisierung benötigte Zeit gemessen wird, können zur Reduzierung des Aufwandes auch Abschätzungen vorgenommen werden. Eine solche Abschätzung kann beispielsweise besagen, dass eine gemusterte Darstellung eines Artefaktes die doppelte derjenigen Zeit in Anspruch nimmt, die eine einfarbige Darstellung benötigt. Ebenso können Elemente auftreten, deren Aufwand für die Darstellung nicht direkt gemessen werden kann, beispielsweise weil zur Darstellung auch Daten benötigt werden, die zum Zeitpunkt der Messung noch nicht vorliegen. Solche Elemente müssen dann beispielsweise mit Erfahrungswerten oder Schätzwerten behandelt werden.

Die hier beschriebene Erfassung der Darstellungszeiten muss zumindest einmalig vorgenommen werden, am besten vor der ersten Darstellung der Website überhaupt, oder bei einer ersten Darstellung im laufenden Betrieb. Für spätere Optimierungen und für eine passende Reaktion auf sich ändernde Randbedingungen, zum Beispiel Änderung der gesamten Auslastung eines Gerätes oder dergleichen, werden solche Messungen zumindest dann wiederholt, wenn nachfolgende Darstellungen oder Aktualisierungen der Website eine veränderte Gesamtdauer zeigen.

Ein dermaßen durchgeführter "Benchmark" umfasst also mindestens die benötigte Zeit auf dem tatsächlichen Zielgerät (Client), um ein Element (screen item) eines bestimmten Typs, ein Artefakt eines konkreten Artefakte-Typs oder dergleichen instanziieren und darstellen oder aktualisieren zu können. Darüber hinaus können weitere Merkmale, z. B. Speicherverbrauch o. ä. erfasst werden. Bei manchen Elemente-Typen oder Artefakte-Typen hat dabei die Konfiguration des jeweiligen Elementes oder Artefaktes Einfluss auf die Performance und somit auch auf den "Benchmark". Sofern sich diese Varianz nicht auf eine konfigurationsspezifische Komposition von Artefakten abbilden lässt, sollen hierfür wie beschrieben separate Benchmarks für die wichtigsten Varianten angefertigt werden; alternativ bietet sich die oben beschriebene Abschätzung an.

Zur Voraussage der gesamten Verarbeitungsdauer für eine Darstellung ("Bildaufschlag") muss also die Anzahl der darstellenden Elemente, Artefakte oder Objekte pro Typ bekannt sein, vorzugsweise vor der ersten tatsächlichen Darstellung, und zusätzlich die für die Darstellung jeden Typs benötigte Zeit.

Für die Darstellung der gesamten Web-Page (screen) oder für die Aktualisierung der gesamten Web-Page ist eine Maximaldauer bzw. vorzugsweise ein Zeitkorridor vorgegeben. Dieser Zeitkorridor kann beispielsweise zwischen 0,8 Sekunden oder 1 Sekunde liegen. Der Zeitkorridor besagt, dass bei einer längeren Dauer (hier: mehr als 1 Sekunde) die Darstellungsqualität einzelner oder aller Elemente soweit reduziert werden muss, bis die Verarbeitungsdauer entsprechend gesunken ist. Eine kürzere Verarbeitungsdauer (tatsächliche oder vorausgesagte Verarbeitungsdauer weniger als 0,8 Sekunden im Beispiel) besagt hingegen, dass eine etwaige zuvor reduzierte Qualität der Darstellung wieder verbessert werden kann, oder dass die angestrebte Bildwiederholrate (Refresh-Rate) erhöht werden kann, oder aber dass Ressourcen für andere Prozesse freigegeben werden können. Sofern also die vorausgesagte oder (später im laufenden Betrieb) tatsächlich erfasste Verarbeitungsdauer außerhalb des Ziel-Zeitkorridors liegt, wird nun eine Anpassung der Qualität der Darstellung und damit eine Anpassung der Qualität der Darstellung einzelner Elemente oder Artefakte vorgenommen. Dafür können verschiedene Prioritäten vorgesehen werden. So kann beispielsweise die höchste Priorität bzw. erste Lösungsmöglichkeit besagen, dass eine entsprechende optische Auflösung von Elementen geändert wird, also dass beispielsweise das Rendering mehr oder weniger aufwändig durchgeführt wird. In einer weiteren Eskalationsstufe können auch niedrig-priore Elemente seltener zur Ausführung kommen, also seltener aktualisiert werden. Hierbei sind Mischformen möglich.

Nach einer Anpassung der Qualität der tatsächlichen Darstellung oder der geplanten Darstellung kann die Voraussage erneuert werden und die Anpassung der Darstellung ggf. in eine nächste Iteration eintreten. Alternativ kann auch die Darstellung mit den neuen Qualitätswerten erfolgen und es kann dabei überprüft werden, ob der erwünschte Erfolg eingetreten ist.

Mit anderen Worten: basierend auf einer vorgegeneben "Deadline", innerhalb derer ein "Bildaufschlag" erfolgt sein muss, kann das System basierend auf gegebenenfalls konfigurierbaren Regeln bestimmen, welche Effekte oder Einstellungen gegebenenfalls zugunsten der Performance reduziert werden, ganz entfallen sollen, erhöht werden, oder sogar zusätzlich dargestellt werden können oder sollen. Fallweise müssen Artefakte oder ganze Elemente durch einfachere oder abstraktere Varianten ersetzt werden, welche schneller dargestellt werden können, als die detaillierten "Originale".

Bei vollständig neuer Darstellung ("full screen update"), also beispielsweise nach einem Hinzufügen weiterer Elemente (screen items) oder bei der Manipulation von solchen durch Verändern von Eigenschaften, wird vom Bedien- und Beobachtungssystem (HMI-System) ebenfalls basierend auf den Messungen (Benchmarks) ermittelt, ob für die Änderung der visuellen Darstellung bzw. Qualität der Darstellung gegebenenfalls hin zu einer einfacheren Repräsentation der Artefakte oder Elemente gewechselt werden soll, um die zeitlichen Vorgaben (Zeitkorridor, Deadline) einhalten zu können. Hierbei ist zu beachten, dass wegen des dabei entstehenden "Overhead" ein Wechsel in der Darstellung bzw. in der Qualität der Darstellung nicht Performance-kritischer ausfallen darf, als die reine Aktualisierung der bestehenden Darstellung mit derselben bestehenden Qualität.

Sowohl für die vollständige Darstellung (Screen-Aufschlag), als auch für eine Aktualisierung (Update, Refresh) gilt weiterhin, dass in den Fällen, in denen das Vereinfachen der Darstellung innerhalb der zeitlichen Grenzen nicht möglich oder erwünscht ist, zu Gunsten der Bedienbarkeit eine Darstellung bzw. eine Aktualisierung auch schrittweise erfolgen kann, wobei dann Aktualisierungen immer in so großen Einheiten verarbeitet werden, wie es innerhalb des Aktualisierungszyklus' möglich ist. Im Fall von Webanwendungen können beispielsweise Updates vom Webserver zurückgehalten werden; zur Vermeidung eines "Rückstaus" können auch nachfolgende Updates von Elementen mit noch ausstehenden Updates aggregiert werden, um mehrere Änderungen am selben Element oder Objekt durch ein einziges Update realisieren zu können.

Während im vorstehend beschriebenen Ausführungsbeispiel sich die Anforderungen für die Aktualisierungsrate (Refresh-Rate) immer auf eine Gesamtdarstellung (gesamter Bildschirm, Screen) beziehen, können sich solche zeitlichen Vorgaben, Zeitkorridore und "Datelines" auch auf einzelne Elemente, Elemente-Typen oder Elemente-Gruppen beziehen; im Falle von Webanwendungen können auch einzelne "Frames", Dialoge oder andere Einheiten getrennt betrachtet werden.

Eine solche in-homogene Betrachtung kann jedoch negativen Einfluss auf die Synchronität haben, d.h., dass nicht alle Elemente gleichzeitig oder quasi-gleichzeitig und im selben Rhythmus dargestellt bzw. aktualisiert werden. Zur Abhilfe sind auch Kombinationen der geschilderten Vorgehensweisen möglich. Beispielsweise können in einem ersten Schritt nur unbedingt erforderliche Elemente oder Artefakte dargestellt werden, beispielsweise die Werte eines Eingabe- oder Ausgabefeldes. Nachgelagert können in einem zweiten Schritt die Details, also beispielsweise Rahmen und Hintergrund eines Feldes, dargestellt werden, sofern nicht zuvor weitere höherepriore Updates zu berücksichtigen sind. Auf diese Weise kommen sämtliche zwingend erforderlichen Elemente synchron zur Anzeige, während weniger wichtige Artefakte später dargestellt werden oder gar entfallen.

Mit dem geschilderten Verfahren und einer geschilderten Anordnung, insbesondere einem hier geschilderten HMI-System bzw. Bedien- und Beobachtungssystem, können Darstellungszeiten ("Aufschlag-Zeiten") und Aktualisierungszeiten ("Update-Zeiten") weitgehend innerhalb geforderter Grenzen garantiert werden, in denen die Darstellung entsprechend der tatsächlichen Performance-Charakteristika des aktuellen Gerätes adaptiert wird. Somit können alle relevanten Objekte, Elemente und Daten dem Nutzer innerhalb definierten Zeiten angezeigt werden. Relevante Informationen können nicht verloren gehen und werden auch nicht verzögert dargestellt oder aktualisiert. Zusätzlich bleibt die generelle Bedienbarkeit erhalten, insbesondere dadurch, dass durch die gezeigten Maßnahmen genügend freie Ressourcen zur Entgegennahme von Bedienbefehlen und Eingaben eines Benutzers verbleiben. Im Falle unzulässiger Verzögerungen, also beispielsweise im Falle eines "Rückstaus" bei der Darstellung oder Aktualisierung von Elementen, können überflüssige "Updates" oder Aktualisierungen an weniger wichtigen Elementen vermieden werden, beispielsweise können auch weniger wichtige Zwischenzustände bei der Darstellung entfallen und zu einer Gesamt-Darstellung in aggregierter Form zu einem späteren Zeitpunkt zusammengefasst werden.

Die skizzierte Lösung ist nicht nur auf Web-Anwendungen und Applikationen für Mobilgeräte anwendbar, sondern auch sämtliche bekannten Bedien- und Beobachtungsysteme. Bei einer vorgegebenen Hardware-Konfiguration, wenn also eine Client-Software feststellt, dass er auf einer bereits werksseitig bekannten vorkonfigurierten Hardware-Konfiguration abläuft, kann die Messung bzw. Analyse der Ausführungszeiten oder Darstellungszeiten der Elemente bereits werksseitig erfolgen und für diesen Fall aus einem Speicher (z.B. Projektierungsdaten) abgerufen werden. Dadurch beschleunigt sich insbesondere die erste Darstellung einer Anzeigeseite (Screen), so dass die vorstehend beschriebenen dynamischen Reaktionen auf geänderte Randbedingungen erst sukzessiv im laufenden Betrieb vorgenommen werden müssen.

## Patentansprüche

1. Verfahren zur Darstellung oder Aktualisierung einer graphischen Benutzeroberfläche eines industriellen Bedien- und Beobachtungssystems auf einem Gerät,
wobei die Benutzeroberfläche aus einer Anzahl darzustellender Elemente besteht,
wobei die jeweiligen Elemente mit jeweils unterschiedlicher Qualität darstellbar sind,
wobei abhängig von der Qualität der Darstellung eines jeweiligen Elements eine jeweilige Ausführungszeit für diese Darstellung durch das Gerät benötigt wird, **dadurch gekennzeichnet,**
**dass** während des Betriebs des Gerätes die jeweilige Ausführungszeit für die Darstellung der Elemente auf diesem Gerät ermittelt und daraus die zur Darstellung der Aktualisierung der gesamten Benutzeroberfläche benötigte gesamte Ausführungszeit errechnet oder abgeschätzt wird, dass die errechnete oder abgeschätzte gesamte Ausführungszeit mit einer vorgegebenen Maximaldauer in Bezug gesetzt wird, und
**dass** aus dem Bezug die jeweilige zu verwendende Qualität zur Darstellung der jeweiligen Elemente derart angepasst wird, dass die Maximaldauer eingehalten und dabei eine bestmögliche Qualität der gesamten Darstellung erreicht wird.

2. Verfahren nach Patentanspruch 1,
**dadurch gekennzeichnet,**
**dass** als das Gerät ein Computer mit einem Web-Browser zur Darstellung der graphischen Benutzeroberfläche oder ein mobiles Gerät mit einer mobilen Applikation zur Darstellung der graphischen Benutzeroberfläche verwendet wird.

3. Verfahren nach Patentanspruch 2,
**dadurch gekennzeichnet,**
**dass** ein System zur Darstellung der graphischen Benutzeroberfläche aus dem Gerät mit einem Client-Programm und einem Server mit einem Server-Programm besteht, wobei die Ermittlung der jeweiligen Ausführungszeit für die Darstellung der Elemente seitens des Client-Programms erfolgt und die darzustellenden Elemente in der jeweils geforderten Qualität seitens des Server-Programms bereitgestellt werden.

4. Verfahren nach einem der vorhergehenden Patentansprüche,
**dadurch gekennzeichnet,**
**dass** für die Elemente verschiedene Elemente-Typen unterschieden werden, wobei die Ausführungszeit für jeden Elemente-Typ ermittelt wird.

5. Verfahren nach einem der vorhergehenden Patentansprüche,
**dadurch gekennzeichnet,**
**dass** als die Elemente Artefakte verwendet werden,
wobei die Artefakte Grundbausteine für verschiedene Objekte der graphischen Benutzeroberfläche sind.

6. Verfahren nach einem der vorhergehenden Patentansprüche,
**dadurch gekennzeichnet,**
**dass** für verschiedene Elemente verschiedene Anforderungen für die Maximaldauer bzw. eine Mindest-Wiederholrate der Darstellung oder Aktualisierung definiert werden.

7. Verfahren nach einem der vorhergehenden Patentansprüche,
**dadurch gekennzeichnet,**
**dass** für eine Anzahl der Elemente eine Anzahl von Aktualisierungen ihrer Darstellung auf der graphischen Benutzeroberfläche zu einer einzigen Gesamt-Aktualisierung zusammengefasst werden.

8. Verfahren nach einem der vorhergehenden Patentansprüche,
**dadurch gekennzeichnet,**
**dass** die Bestimmung der Ausführungszeit für die Darstellung oder Aktualisierung der Elemente auf der graphischen Benutzeroberfläche vor der ersten Darstellung oder während der ersten Darstellung auf der Benutzeroberfläche erfolgt und die dabei erfassten Werte für die Ausführungszeit der einzelnen Elemente während nachfolgender Darstellungen oder Aktualisierungen erneut erfasst bzw. aktualisiert werden.

9. Verfahren nach einem der vorhergehenden Patentansprüche,
**dadurch gekennzeichnet,**
**dass** eine Variation der Qualität der Darstellung eines Elementes eine Variation der optischen Auflösung, der Farbtiefe, der Detaillierung der darzustellenden Inhalte und/oder die Anzahl oder Art der Darstellung von interaktiven Bedienmitteln betrifft.

10. Anordnung zur Darstellung oder Aktualisierung einer graphischen Benutzeroberfläche eines industriellen Bedien- und Beobachtungssystems mit einem Gerät,
wobei die Benutzeroberfläche aus einer Anzahl darzustellender Elemente besteht,
wobei vorgesehen ist, dass eine Anzahl der Elemente in verschiedenen Alternativen mit jeweils unterschiedlicher Qualität darstellbar ist,
wobei abhängig von der Qualität die Darstellung eines jeweiligen Elementes eine jeweilige Ausführungszeit benötigt,
**dadurch gekennzeichnet,**
**dass** das Gerät eine Funktion zur Ermittlung der jeweiligen Ausführungszeit für die jeweilige Darstellung der Elemente während des Betriebs aufweist,
wobei weiter eine Funktion zur Errechnung oder Abschätzung der zur Darstellung oder Aktualisierung der gesamten Benutzeroberfläche benötigten gesamten Ausführungszeit vorgesehen ist,
**dass** Mittel zur In-Bezugsetzung der errechneten oder abgeschätzten gesamten Ausführungszeit zu einer vorgegebenen Maximaldauer vorgesehen sind, und
**dass** das Gerät dazu eingerichtet ist, aus dem Bezug die jeweilige zu verwendende Qualität zur Darstellung der jeweiligen Elemente festzulegen, so dass die Maximaldauer eingehalten und die dabei bestmögliche Qualität der Darstellung sich ergibt.
